# EUROPÄISCHE PATENTANMELDUNG

(11) **EP 1 701 282 A1**
(43) Veröffentlichungstag der Anmeldung: **13.09.2006**
(21) Anmeldenummer: 06110099.6
(22) Anmeldetag: 17.02.2006
(51) Int. Cl.: G06F 21/00

(54) **Computersystem und Verfahren zur Signierung, Signaturverifizierung und/oder Archivierung**

(30) Priorität: 09.03.2005 DE 102005011166
(71) Anmelder: Bundesdruckerei GmbH, 10958 Berlin (DE)
(72) Erfinder: von Berg, Achim, 15566, Schöneiche (DE); Stahl, Peter, 10781, Berlin (DE); Albers, Stefan, 26127, Oldenburg (DE); Schneider, Gerd, 10437, Berlin (DE); Schmelz, Albrecht, 14482, Potsdam (DE); Ziebarth, Frank, 15859, Storkow (DE); Ziska, Andreas, 12107, Berlin (DE)
(74) Vertreter: Richardt, Markus Albert

(57) **Zusammenfassung**

Die Erfindung betrifft ein Computersystem mit
- Mitteln (102; 102' , 102") zur Herstellung von Kommunikationsverbindungen mit mehreren Teilnehmern,
- Mitteln (106) zur Signierung von Daten, die von einem der Teilnehmer empfangen worden sind,
- Mitteln (108) zur Verifizierung einer elektronischen Signatur von Daten, die von einem der Teilnehmer empfangen worden sind,
- Mitteln (110) zur Archivierung von Daten, die von einem der Teilnehmer empfangen worden sind,
- Mitteln (116) zur Speicherung von Teilnehmerprofilen, wobei durch ein Teilnehmerprofil festgelegt ist, ob von dem betreffenden Teilnehmer empfangene Daten zu signieren, zu verifizieren und / oder zu archivieren sind.

## Beschreibung

Die Erfindung betrifft ein Computersystem sowie ein Verfahren zur Signierung, Signaturverifizierung und / oder Archivierung von Daten und ein entsprechendes Computerprogrammprodukt.

Verfahren zur elektronischen Signierung von Dokumenten sind an sich aus dem Stand der Technik bekannt. Für die elektronische Signierung eines Dokuments wird ein Schlüsselpaar erzeugt, welches aus einem geheimen (sogenannter "Private Key") und einem öffentlichen Schlüssel (sogenannter "Public Key") besteht. Im Allgemeinen wird aus dem Dokument ein HASH-Wert mit einer vordefinierten HASH-Funktion erzeugt.

Der HASH-Wert wird dann mit dem geheimen Schlüssel verschlüsselt. Das so erhaltene Chiffrat stellt die elektronische Signatur dar. Der zu dem Schlüsselpaar gehörende öffentliche Schlüssel kann zur Verifizierung der Echtheit der Signatur verwendet werden, indem der HASH-Wert erneut aus dem Dokument erzeugt wird und die elektronische Signatur mit dem öffentlichen Schlüssel dechiffriert wird. Stimmen die beiden so erhaltenen HASH-Werte überein, so wird die elektronische Signatur als echt betrachtet.

Die Rahmenbedingungen für die Verwendung elektronischer Signaturen sind für den Bereich der Europäischen Union durch die Richtlinie 1999 / 93 / EG des Europäischen Parlaments und des Rates vom 13. Dezember 1999 über gemeinschaftliche Rahmenbedingungen für elektronische Signaturen gesetzt worden. In der Bundesrepublik Deutschland ist diese Richtlinie durch das Signaturgesetz umgesetzt worden. Sofern die rechtlichen Rahmenbedingungen des Signaturgesetzes eingehalten werden, ist gemäß § 126 a des Bürgerlichen Gesetzbuches die qualifizierte elektronische Signatur der eigenhändigen Unterschrift weitgehend gleichgestellt, so dass auch das Schriftformerfordernis durch eine qualifizierte elektronische Signatur erfüllt werden kann.

Bisher ist jedoch die Verwendung von elektronischen Signaturen im Rechtsverkehr mit verschiedenen Schwierigkeiten verbunden:
1. Viele existente Applikationen, insbesondere sog. Legacy Systeme, wie zum Beispiel sogenannte "Enterprise Resource Planning" (ERP) -Systeme, unterstützen nicht die elektronische Signaturfunktion.
2. Unterschiedliche Datenformate, wie zum Beispiel EDIFACT, IDOC, XML, CCG-ASCI oder BEMIS Datenformate, erschweren den Austausch elektronisch signierter Dokumente zwischen verschiedenen Systemen.
3. Die Umstellung auf elektronische Signaturverfahren erfordert relativ hohe Investitionen in Informationstechnologie und Mitarbeiterschulung.
4. Für manche Anwendungen ist die Schaffung einer Hochsicherheitsumgebung zum Schutz der signierten, verifizierten und / oder archivierten Daten vor Manipulationen erforderlich, was ebenfalls sehr aufwändig ist.

Der Erfindung liegt dem gegenüber die Aufgabe zu Grunde, ein verbessertes Computersystem und ein Verfahren zur Signierung, Signaturverifizierung und / oder Archivierung von Daten zu schaffen, sowie auch ein entsprechendes Computerprogrammprodukt, welches die Verwendung von elektronischen Signaturen im Rechtsverkehr erleichtert.

Die der Erfindung zu Grunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Computersystem geschaffen, das Mittel zur Herstellung von Kommunikationsverbindungen mit mehreren Teilnehmern, Mittel zur Signierung der von einem Teilnehmer empfangenen Daten, Mittel zur Verifizierung einer elektronischen Signatur der von einem Teilnehmer empfangenen Daten und Mittel zur Archivierung von einem Teilnehmer empfangener Daten aufweist. Das Computersystem hat Mittel zur Speicherung von Teilnehmerprofilen, wobei durch ein Teilnehmerprofil festgelegt ist, ob von dem betreffenden Teilnehmer empfangene Daten zu signieren, zu verifizieren und /oder zu archivieren sind.

Durch die Erfindung wird also eine Plattform geschaffen, die es verschiedenen registrierten Teilnehmern ermöglicht, Dienste, die im Zusammenhang mit der elektronischen Signatur stehen, in Anspruch zu nehmen, ohne dass die Teilnehmer wesentliche Veränderungen an deren existenten IT-Systemen, beispielsweise ERP-Anwendungen, vornehmen müssen. Durch die Konfigurierbarkeit der von einem Teilnehmer in Anspruch genommenen Dienste über dessen Teilnehmerprofil wird durch das erfindungsgemäße Computersystem eine flexible Lösung für die im Zusammenhang mit der elektronischen Signatur bestehenden Bedürfnisse eines Teilnehmers geschaffen, die auf die Anforderungen des Teilnehmers flexibel anpassbar ist.

Nach einer Ausführungsform der Erfindung werden durch das Computersystem auch Formatkonvertierungen vorgenommen. Von einem Teilnehmer empfangene Daten, die in einem Sender-Format vorliegen, werden von dem Computersystem in ein von dem Computersystem verwendetes Verarbeitungs-Format, beispielsweise in ein Format einer Auszeichnungssprache (sog. mark-up language), insbesondere ein XML-Format, konvertiert.

Wenn die Daten an einen Empfänger weiterzuleiten sind, der ein anderes Datenformat benötigt, werden die Daten aus dem Verarbeitungs-Format in das gewünschte Empfänger-Format konvertiert. Die Verwendung eines einzigen Verarbeitungs-Format durch das Computersystem hat den Vorteil, dass sich dadurch der Anzahl der Konvertierungsfunktionen drastisch reduzieren lässt. Wenn das Computersystem beispielsweise eine Anzahl von n Sender-Formaten und eine Anzahl von m Empfänger-Formaten unterstützen soll, wären an sich n x m Konverter für die Konvertierung von jedem Sender-Format in jedes Empfänger-Format erforderlich. Durch die Erfindung wird die Anzahl der Konverter auf maximal n + m reduziert.

Nach einer Ausführungsform der Erfindung muss sich ein Teilnehmer vor der Inanspruchnahme eines von dem Computersystem zur Verfügung gestellten Dienstes gegenüber dem Computersystem authentifizieren. Hierzu wird vorzugsweise ein Authentifizierungsverfahren mit einem kryptographischen Protokoll verwendet, wie zum Beispiel das Secure Sockets Layer Version 3 (SSLV3) Protokoll.

Die Datenübertragung zwischen den Teilnehmern und dem Computersystem erfolgt vorzugsweise über ein Datenprotokoll, wie zum Beispiel TCP / IP oder Telebox 400.

Nach einer Ausführungsform der Erfindung hat das Computersystem mehrere Transmission Control Protocol (TCP) Ports, wobei jedem Port ein Sender-Format zugeordnet ist. Beispielsweise werden freie Port-Adressen im fünfstelligen Bereich verwendet. Eine Port-Adresse ist beispielsweise dem Format EDIFACT, eine weitere Port-Adresse dem Format IDOC und eine weitere Port-Adresse dem Format CCG-ASCI zugeordnet. Wenn ein Teilnehmer beispielsweise das Format EDIFACT verwendet, so sendet der Teilnehmer seine Anforderung (Request) an die dem EDIFACT-Format zugeordnete Port-Adresse des Computersystems. Diesem Port ist ein Konvertierungsprogramm zugeordnet, welches die Konvertierung von EDIFACT in das von dem Computersystem verwendete Verarbeitungs-Format vornimmt.

Nach einer Ausführungsform der Erfindung wird mit Hilfe von Authentifizierungsdaten eines Teilnehmers auf dessen Teilnehmerprofil zugegriffen. Beispielsweise ist dem Teilnehmer eine Teilnehmerkennung zugeordnet, die als Schlüssel verwendet wird, um auf das Teilnehmerprofil in einer Konfigurationsdatenbank zuzugreifen.

Nach einer Ausführungsform der Erfindung beinhalten die von einem Teilnehmer empfangenen Daten eine Kennung eines anderen Teilnehmers, an den die Daten weitergeleitet werden sollen. Mit Hilfe dieser Kennung kann auf das Teilnehmerprofil des weiteren Teilnehmers zugegriffen werden, um beispielsweise das von dem weiteren Teilnehmer gewünschte Datenformat, die Art der Weiterleitung der Daten an den weiteren Teilnehmer - zum Beispiel auf elektronischem Wege oder als Ausdruck - sowie die Adresse des weiteren Teilnehmers auszulesen.

Die vorliegende Erfindung kann beispielsweise für den Versand von elektronischen Rechnungen verwendet werden. Von einem ersten Teilnehmer, der die elektronische Rechnung an einen zweiten Teilnehmer versenden möchte, empfängt das Computersystem entsprechende Daten, beispielsweise im Format EDIFACT, IDOC oder CCG-ASCI. Durch Zugriff auf das Teilnehmerprofil des ersten Teilnehmers stellt das Computersystem fest, dass dieser Teilnehmer die Signierung der elektronischen Rechnung und die Weiterleitung der elektronischen Rechnung an den zweiten Teilnehmer wünscht. Ferner kann auch die Archivierung der elektronischen Rechnung in dem Teilnehmerprofil des ersten Teilnehmers spezifiziert sein.

Die in dem Datenformat des ersten Teilnehmers empfangenen Daten werden in das von dem Computersystem verwendete Datenformat konvertiert. Die Kennung des zweiten Teilnehmers wird dann aus dem konvertierten Dokument ausgelesen, um auf das Teilnehmerprofil des zweiten Teilnehmers zuzugreifen. Danach erfolgt die Konvertierung der Daten aus dem von dem Computersystem verwendetem Format in das von dem zweiten Teilnehmer spezifizierte Datenformat, d.h. das Empfänger-Format, sowie die elektronische Signierung der in das Empfänger-Format konvertierten Daten. Die Signierung kann durch eine elektronische Signatur des Betreibers des Computersystems vorgenommen werden, insbesondere in einem sogenannten Massensignaturverfahren. Hierzu ist es erforderlich, dass der erste Teilnehmer dem Betreiber des Computersystems die Vollmacht für die Signierung von dessen elektronischen Rechnungen erteilt hat, so dass in dem Teilnehmerprofil des ersten Teilnehmers ein entsprechendes Bit gesetzt ist.

Falls der erste Teilnehmer eine solche Vollmacht nicht erteilt hat, werden die in das Empfänger-Format konvertierten Daten an den ersten Teilnehmer übertragen, so dass dieser mit einem Signatur-Client die elektronische Signatur selbst vornehmen kann. Die von dem ersten Teilnehmer signierten Daten werden dann an das Computersystem übertragen und von dort an den zweiten Teilnehmer weitergeleitet. Ferner werden die Daten von dem Computersystem archiviert, wenn dies in dem Teilnehmerprofil des ersten Teilnehmers spezifiziert ist.

Die Erfindung ermöglicht ferner die Verifikation und Archivierung von Daten, die eine elektronische Signatur aufweisen. Das Computersystem empfängt von einem der Teilnehmer Daten, die eine elektronische Signatur aufweisen. Das Computersystem greift auf das Teilnehmerprofil dieses Teilnehmers zu. In dem Teilnehmerprofil ist angegeben, dass der betreffende Teilnehmer die Verifizierung der elektronischen Signatur sowie die Archivierung der Daten wünscht. Daraufhin wird die elektronische Signatur verifiziert. Der Ablauf des Verifikationsverfahrens wird in einem Prüfprotokoll festgehalten. Die Daten werden zusammen mit dem Prüfprotokoll archiviert. Optional werden die unsignierten Daten von dem Computersystem an den Teilnehmer zurück gesendet.

Vorzugsweise kann der Teilnehmer auf das archivierte Prüfprotokoll zugreifen, um sich zu vergewissern, dass die elektronische Signatur der zuvor gesendeten Daten verifiziert werden konnte. Dieser Zugriff kann auch von einem anderen hierzu autorisierten Teilnehmer durchgeführt werden. Hierzu hat das Computersystem beispielsweise ein Web-Interface, so dass auch hierzu autorisierte Dritte bequem auf die archivierten Prüfprotokolle zugreifen können.

Nach einer weiteren Ausführungsform der Erfindung können die Teilnehmer selbst auf deren Teilnehmerprofile zugreifen, beispielsweise, um diese zu aktualisieren. Dieser Zugriff kann beispielsweise über ein Web-Interface des Computersystems erfolgen. Insbesondere für den Anwendungsfall des Versendens der elektronischen Rechnungen hat dies den Vorteil, dass der Rechnungsempfänger selbst seine Stammdaten aktualisieren kann, so dass nicht der Rechnungsversender zunächst geänderte Stammdaten von seinen Rechnungsempfängern erhalten muss, um diese dann in dem Konfigurationsspeicher des Computersystems zu aktualisieren.

Die vorliegende Erfindung ist besonders vorteilhaft, da sie es ermöglicht, eine Plattform zu schaffen, die eine Vielzahl von Teilnehmern für Dienste, die im Zusammenhang mit der elektronischen Signatur stehen, in Anspruch nehmen können. Das erfindungsgemäße Computersystem kann also als eine sogenannte "Hub" ausgebildet sein. Hierdurch werden die Gesamtaufwendungen für Investitionen in Computerhardware und -software bei den Teilnehmern stark reduziert, da auch insbesondere so genannte Legacy-Anwendungen mit einem erfindungsgemäßen Computersystem interoperabel sein können.

Im weiteren werden bevorzugte Ausführungsformen der Erfindung mit Bezugnahme auf die Zeichnung näher erläutert. Es zeigen:
- Figur 1: ein Blockdiagramm einer ersten Ausführungsform eines erfindungsgemäßen Computersystems,
- Figur 2: eine zweite Ausführungsform eines erfindungsgemäßen Computersystems,
- Figur 3: eine Ausführungsform eines erfindungsgemäßen Verfahrens,
- Figur 4: eine dritte Ausführungsform eines erfindungsgemäßen Computersystems,
- Figur 5: eine zweite Ausführungsform eines erfindungsgemäßen Verfahrens.

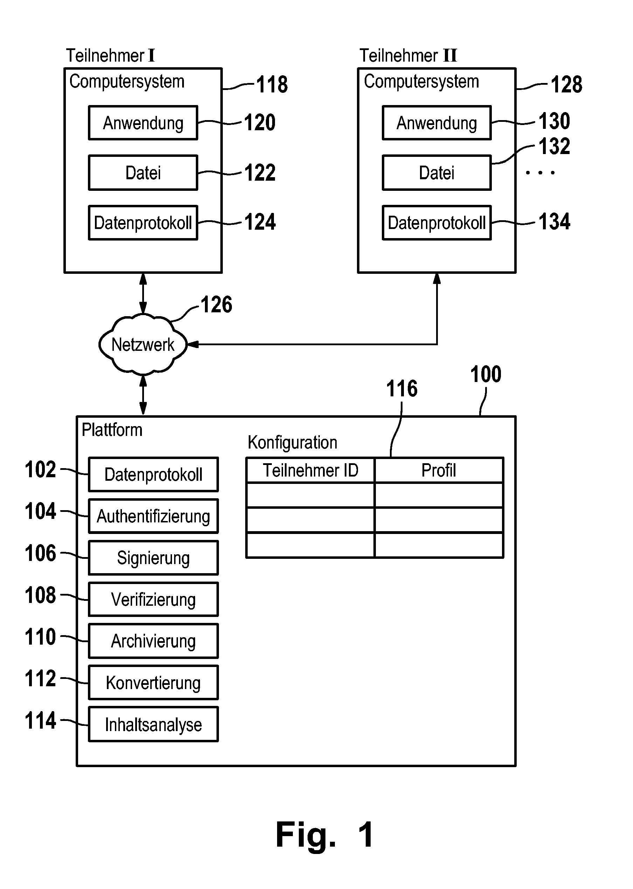

Die Figur 1 zeigt ein Computersystem 100 durch welches eine Plattform für mehrere Teilnehmer I, II, ... zur Verfügung gestellt wird. Das Computersystem 100 hat eine Kommunikationsschnittstelle 102 zur Herstellung von Kommunikationsverbindungen mit den Teilnehmern I, II, ... mit Hilfe eines Datenprotokolls, wie zum Beispiel TCP / IP. Das Computersystem 100 hat eine Authentifizierungskomponente 104 zur Authentifizierung der Teilnehmer I, II, ... gegenüber dem Computersystem 100. Die Authentifizierung erfolgt vorzugsweise unter Verwendung eines kryptographischen Protokolls, insbesondere mit dem Secure Socket Layer (SSL) V3 Protokoll.

Das Computersystem 100 hat eine Signierungskomponente zur Erzeugung einer elektronischen Signatur, eine Verifizierungskomponente 108 zur Überprüfung der Echtheit einer elektronischen Signatur und eine Archivierungskomponente 110 zur Archivierung von Daten oder Dateien, wie zum Beispiel elektronischen Rechnungen, und den dazugehörigen Prüfprotokollen, die von der Verifizierungskomponente 108 generiert wurden.

Die Konvertierungskomponente 112 des Computersystems 100 dient zur Konvertierung der Formate von empfangenen Daten oder Dateien in ein von dem Computersystem 100 verwendetes Verarbeitungs-Format. Beispielsweise kann das Computersystem 100 Daten im Format EDIFACT, IDOC, CCG-ASCI und / oder andere Formate empfangen. Daten solcher Formate werden in ein einheitliches, von dem Computersystem 100 verwendetes Format konvertiert. Bei diesem von dem Computersystem 100 verwendeten Format kann es sich beispielsweise um ein Format einer Auszeichnungssprache, wie zum Beispiel ein XML-Format handeln.

Durch die Konvertierungskomponente 112 kann auch eine Konvertierung aus dem von dem Computersystem 100 verwendeten Format, also beispielsweise dem XML-Format, in verschiedene Empfänger-Formate von Teilnehmern, die Daten oder Dateien von dem Computersystem empfangen können, erfolgen. Eine solche Datenkonvertierung hat den Vorteil, dass unabhängig von den jeweils verwendeten Datenformaten der Teilnehmer ein Datenaustausch zwischen den Teilnehmern über die von dem Computersystem 100 gebildete Plattform oder "Hub" erfolgen kann.

Das Computersystem 100 hat ferner eine Analyse-Komponente 114 zum Auslesen von Informationen aus den zuvor in das von dem Computersystem 100 verwendete Format konvertierten Daten oder Dateien. Ein solches Auslesen von Informationen kann für die Weiterverarbeitung oder Weiterleitung von Daten oder Dateien erforderlich sein. Die Analyse-Komponente 114 ist dabei so ausgebildet, dass sie Daten oder Dateien in dem von dem Computersystem 100 verwendeten Format verarbeiten kann. Die Formatkonvertierung durch die Konvertierungskomponente 112 hat also auch den Vorteil, dass dieselbe Analyse-Komponente 114 verwendet werden kann, um Daten oder Dateien verschiedener Teilnehmer, die unterschiedliche Datenformate verwenden, zu verarbeiten. Dies reduziert den Programmierungsaufwand für die Analyse-Komponente 114 ganz erheblich.

Das Computersystem 100 hat eine Konfigurationsdatenbank 116, in der Teilnehmerprofile abgespeichert sind. Auf jedes der Teilnehmerprofile kann mit einer Kennung ("Teilnehmer-ID") zugegriffen werden. Bei der Teilnehmer-ID handelt es sich beispielsweise um einen sogenannten Primär- oder Sekundärschlüssel der Konfigurationsdatenbank 116.

In jedem der Teilnehmerprofile ist festgelegt, ob von dem betreffenden Teilnehmer empfangene Daten zu signieren, zu verifizieren und / oder zu archivieren sind. Durch das Teilnehmerprofil wird also festgelegt, welche der von der Plattform zur Verfügung gestellten Dienste ein Teilnehmer nutzen möchte. Alternativ oder zusätzlich kann in einem Teilnehmerprofil festgelegt sein, welches Daten oder Dateiformat der betreffende Teilnehmer erfordert, welches seine Teilnehmer-Adresse und / oder die von dem Teilnehmer gewünschte Art der Datenübertragung, das heißt zum Beispiel auf elektronischem Wege oder in Papierform, ist.

Die Figur 1 zeigt exemplarisch ein Computersystem 118 des Teilnehmers I. Das Computersystem 118 hat ein Anwendungsprogramm 120, wie zum Beispiel ein sogenanntes ERP-Programm. Das Anwendungsprogramm 120 kann eine Datei 122 generieren. Bei der Datei 122 kann es sich beispielsweise um eine elektronische Rechnung im Format EDIFACT handeln. Das Computersystem 118 hat ferner eine Kommunikationsschnittstelle 124, durch die ein Datenprotokoll realisiert wird, um über ein Netzwerk 126 mit dem Computersystem 100 Kommunikationsverbindungen aufbauen zu können. Bei dem Netzwerk 126 kann es sich zum Beispiel um ein öffentliches Netzwerk, wie zum Beispiel das Internet, oder ein anderes Computer- und /oder Telekommunikationsnetzwerk handeln.

Das Computersystem 128 des Teilnehmers II hat ein Anwendungsprogramm 130; hierbei kann es sich ebenfalls um ein ERP-Anwendungsprogramm, ein Buchhaltungsprogramm oder dergleichen handeln.

Das Anwendungsprogramm 130 dient zur Verarbeitung einer Datei 132, die über eine Kommunikationsschnittstelle 134 empfangen worden ist. Die Kommunikationsschnittstelle 134 realisiert ein Datenprotokoll zum Aufbau von Kommunikationsverbindungen mit dem Computersystem 100.

Für den Teilnehmer I ist in der Konfigurationsdatenbank 116 ein Teilnehmerprofil gespeichert, welches beispielsweise spezifiziert, dass eine von dem Teilnehmer I empfangene Datei 122 zu signieren und an den in der Datei 122 identifizierten Teilnehmer, das heißt beispielsweise den Teilnehmer II, weiterzuleiten ist. Hierzu beinhaltet die Datei 122 die Teilnehmer-ID desjenigen Teilnehmers, der die Datei 122 empfangen soll. Als Teilnehmerkennung kann beispielsweise die sogenannte International Location Number (ILN) des Teilnehmers verwendet werden.

Zur Verwendung der von dem Computersystem 100 zur Verfügung gestellten Dienste baut der Teilnehmer I mit seinem Computersystem 118 über die Kommunikationsschnittstelle 124 eine Kommunikationsverbindung über das Netzwerk 126 mit dem Computersystem 100, das heißt dessen Kommunikationsschnittstelle 102 auf. Hierüber erfolgt mit Hilfe der Authentifizierungskomponente 104 des Computersystems 100 die Authentifizierung des Teilnehmers I, vorzugsweise nach dem SSLV3 Protokoll.

Aufgrund der Authentifizierung ist der Teilnehmer I gegenüber dem Computersystem 100 identifiziert, so dass das Computersystem 100 auf das Teilnehmerprofil des Teilnehmers I in der Konfigurationsdatenbank 116 zugreifen kann. Sobald das Computersystem 100 die Datei 122 von dem Teilnehmer I empfängt, wird die Datei 122 durch die Konvertierungskomponente 112 in das von dem Computersystem 100 verwendete Format, beispielsweise ein XML-Format konvertiert. Die in das von dem Computersystem 100 verwendete Format konvertierte Datei 122 wird dann durch die Analyse-Komponente 114 einer inhaltlichen Analyse unterzogen; in dem hier betrachteten Beispielsfall wird durch die inhaltliche Analyse die Kennung des Teilnehmers ermittelt, der die Datei von dem Teilnehmer I empfangen soll, also zum Beispiel dessen sog. International Location Number ILN. Mit Hilfe dieser Kennung kann auf das in der Konfigurationsdatenbank 116 gespeicherte Teilnehmerprofil des Teilnehmers II zugegriffen werden.

Die in das von dem Computersystem 100 verwendete Format konvertierte Datei 122 wird dann von der Konvertierungskomponente 112 in das in dem Teilnehmerprofil des Teilnehmers II spezifizierte Format konvertiert. Die in das Format des Teilnehmers II konvertierte Datei 122 wird dann durch die Signierungskomponente 106 elektronisch signiert.

Dies kann so erfolgen, dass die elektronische Signierung zum Beispiel in einem sogenannten Massensignaturverfahren durch den Betreiber der Plattform 100 erfolgt, wenn in dem Teilnehmerprofil des Teilnehmers I die hierzu erforderliche Vollmacht angegeben ist. Andernfalls sendet die Signierungskomponente 106 die in das Format des Teilnehmers II konvertierte Datei 122 über die Kommunikationsschnittstelle 102 an das Computersystem 118 des Teilnehmers I zurück, der dann selbst die elektronische Signatur vornimmt. Die signierte Datei 122 wird in dem Datenformat des Teilnehmers II dann von dem Teilnehmer I an das Computersystem 100 zurückgesendet, welches die signierte Datei 122 an den Teilnehmer II über das Netzwerk 126 weiterleitet.

Nach Empfang der signierten Datei 122, welche in dem hier betrachteten Beispielsfall gleich der Datei 132 ist, kann das Computersystem 128 beispielsweise mittels des Anwendungsprogramms 130 die Datei 132 weiterverarbeiten. Hierzu ist es typischerweise erforderlich, das von dem Teilnehmer II die Echtheit der elektronisch signierten Datei 132 überprüft wird. Zur Überprüfung der Echtheit der elektronisch signierten Datei 132 konnektiert der Teilnehmer II sein Computersystem 128 über das Netzwerk 126 mit dem Computersystem 100. Danach wird der Teilnehmer II mit Hilfe der Authentifizierungskomponente 104 gegenüber dem Computersystem 100 authentifiziert. Dies ermöglicht den Zugriff auf das Teilnehmerprofil des Teilnehmers II in der Konfigurationsdatenbank 116. In dem Teilnehmerprofil des Teilnehmers II ist in dem hier betrachteten Beispielsfall zusätzlich angegeben, dass der Teilnehmer II die Verifizierung der elektronischen Signatur von dem Teilnehmer II empfangenen Dateien wünscht sowie die Archivierung solcher Dateien und der dazugehörigen Prüfprotokolle.

Der Teilnehmer II sendet dann von dem Computersystem 128 die signierte Datei 132 über das Netzwerk 126 an das Computersystem 100. Durch die Verifizierungskomponente 108 wird dann eine Überprüfung der Echtheit der elektronischen Signatur der Datei 132 vorgenommen und ein entsprechendes Prüfprotokoll generiert. Die Datei 132 wird zusammen mit dem Prüfprotokoll entsprechend der Angabe in dem Teilnehmerprofil des Teilnehmers II durch die Archivierungskomponente 110 archiviert. Das Ergebnis der Überprüfung der elektronischen Signatur der Datei 132 kann von dem Computersystem 100 über das Netzwerk 126 an den Teilnehmer II kommuniziert werden oder an einen anderen hierzu autorisierten Teilnehmer. Vor der Archivierung der Datei 132 wird diese vorzugsweise durch die Konvertierungskomponente 112 in das von dem Computersystem 100 verwendete Datenformat konvertiert.

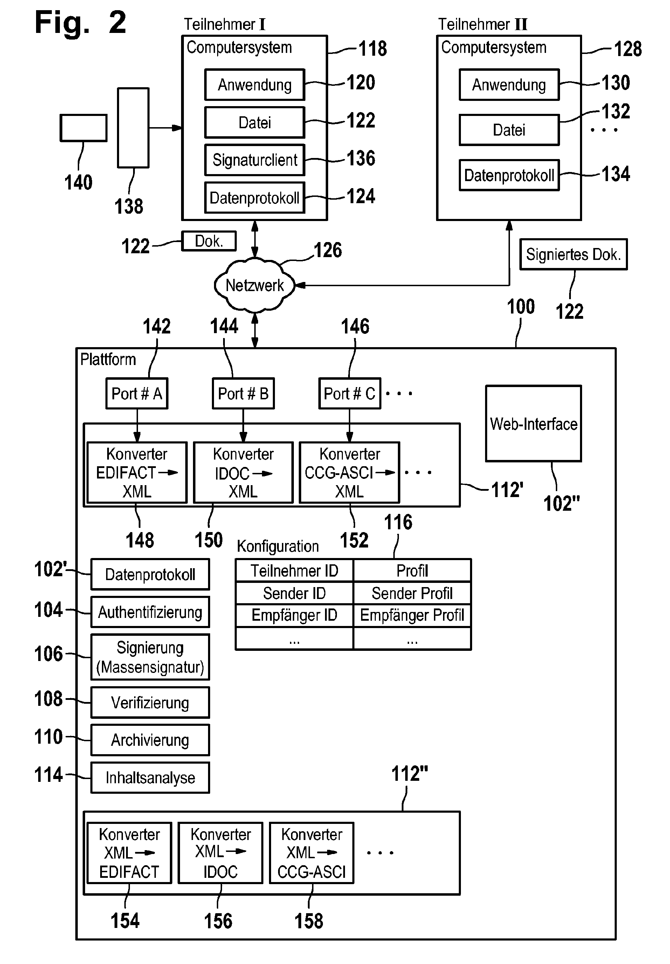

Die Figur 2 zeigt eine weitere Ausführungsform. Elemente der Figur 2, die Elementen der Figur 1 entsprechen, sind mit denselben Bezugszeichen gekennzeichnet.

In dem hier betrachteten Ausführungsbeispiel verfügt das Computersystem 118 über einen Signatur-Client 136 zur Vornahme elektronischer Signaturen. Hierzu ist ein Chipkartenlesegerät 138 an das Computersystem 118 angeschlossen. Auf einer Chipkarte 140 ist der private Schlüssel des Teilnehmers I für die Vornahme einer elektronischen Signatur durch den Signatur-Client 136 gespeichert. Beispielsweise ist der private Schlüssel als Teil einer sogenannten PSE (Personal Security Environment) auf der Chipkarte 140 gespeichert. Neben dem privaten Schlüssel gehören zu der PSE unter anderem das sogenannte Zertifikat. Alternativ kann das PSE als verschlüsselte Datei in dem Computersystem 118 gespeichert werden. Die Verwendung des PSE ist typischerweise durch ein Passwort geschützt.

Die Signierungskomponente 106 des Computersystems 100 ist für die Durchführung eines sogenannten Massensignaturverfahrens, das heißt der automatisierten Signierung ausgebildet. Hierzu hat die Signierungskomponente 106 ein sogenanntes Chipkarten-Rack zur Aufnahme einer größeren Anzahl parallel arbeitender Chipkarten, um eine hohen Durchsatz zu ermöglichen. Bei einem Chipkarten-basierten Massensignaturverfahren sind die Chipkarten so ausgebildet, dass nach einmaliger korrekter Eingabe der PIN eine beliebige Anzahl von elektronischen Signaturen automatisiert durchgeführt werden können. Massensignaturverfahren sind als solche aus dem Stand der Technik bekannt, vgl. hierzu zum Beispiel "Aspekte der Massensignatur", Detlef Pühnlein, Yvonne Knosowski (http://www.secunet.de/download/fachartikel/dach2003_aspekte-der-massensignatur.pdf).

In dem hier betrachteten Ausführungsbeispiel wird als Datenprotokoll für die Kommunikation zwischen dem Computersystem 100 und den Computersystemen 118, 128, ... das TCP / IP Protokoll verwendet. Das Computersystem 100 hat mehrere TCP /IP-Ports 142, 144, 146, ... Jedem der TCP / IP-Ports ist eine Portnummer zugeordnet. Zum Beispiel hat der TCP / IP-Port 142 die Portnummer A, der TCP / IP-Port 144 die Portnummer B, der TCP / IP-Port 146 die Portnummer C etc.

Vorzugsweise liegen die Portnummern A, B, C, ... in einem Nummernraum, der nicht die allgemein üblichen Portnummern beinhaltet. Allgemein übliche Portnummern sind zum Beispiel Portnummer 23 für Telnet, Portnummer 25 für SMTP, Portnummer 80 für HTTP, Portnummer 443 für HTTPS, Portnummer 3389 für MSRemote Desktop /Terminal Services, Portnummer 5631 und 5632 für pcAnywhere. Beispielsweise haben die Portnummern A, B, C, ... mindestens fünf Stellen und werden von der Portnummer 50.000 ab aufsteigend vergeben. Neben den TCP / IP-Ports 142, 144, 146, ... aus diesem noch nicht belegten Portnummernraum kann das Computersystem 100 weitere übliche Ports, wie zum Beispiel einen Port 80 für HTTP und einen Port 443 für HTTPS Kommunikation aufweisen.

In dem hier betrachteten Ausführungsbeispiel beinhaltet die Konvertierungskomponente 112 zwei Konvertergruppen 112' und 112". Die Konvertergruppe 112' beinhaltet die Konverter 148, 150, 152, ... Jeder dieser Konverter der Konvertergruppe 112' dient zur Konvertierung eines Sender-Formats, das heißt eines von einem der Teilnehmer I, II, ... empfangenen Daten- oder Dateiformats, in ein von dem Computersystem 100 verwendetes Format. Bei dem von dem Computersystem 100 verwendeten Format handelt es sich vorzugsweise um das Format einer Auszeichnungssprache, insbesondere um ein XML-Format.

Beispielsweise dient der Konverter 148 zur Konvertierung eines EDIFACT Sender-Formats, in das XML-Format des Computersystems 100, der Konverter 150 zur Konvertierung eines IDOC Sender-Formats in XML, der Konverter 152 zur Konvertierung eines CCG-ASCI Sender-Formats in XML, usw.

Jeder der Konverter 148, 150, 152, ... der Konvertergruppe 112' ist dabei fest einem der TCP / IP-Ports 142, 144, 146, ... zugeordnet. Insbesondere ist der Konverter 148 dem TCP / IP-Port 142 zugeordnet, der Konverter 150 dem TCP / IP-Port 144 und der Konverter 152 dem TCP / IP-Port 146, usw. Der TCP / IP-Port 142 dient also zum Empfang von EDIFACT-Dokumenten, die dann von dem TCP / IP-Port 142 zugeordnetem Konverter 148 automatisch in das XML-Format des Computersystems 100 umgewandelt werden. Entsprechend dient der TCP / IP-Port 144 zum Empfang von IDOC-Dokumenten, die dann automatisch in XML umgewandelt werden, der Port 146 zum Empfang von CCG-ASCI-Dokumenten, die ebenfalls automatisch in das XML-Format umgewandelt werden, etc.

Die Konvertergruppe 112" beinhaltet mehrere Konverter 154, 156, 158, ... In dem hier betrachteten Ausführungsbeispiel dient der Konverter 154 zur Konvertierung aus dem XML-Format des Computersystems 100 in EDIFACT, der Konverter 156 zur Konvertierung aus dem XML-Format in das IDOC-Format, der Konverter 158 zur Konvertierung aus dem XML-Format in CCG-ASCI, etc. Im Allgemeinen kann die Konvertergruppe 112' eine Anzahl von n Konvertern zur Konvertierung von n Sender-Formaten in das Verarbeitungsformat des Computersystems 100 beinhalten und die Konvertergruppe 112" eine Anzahl m Konvertern zur Konvertierung aus dem Verarbeitungsformat in m Empfänger-Formate. Dabei kann n < m, n = m oder auch n > m sein.

Für den Teilnehmer I ist in der Konfigurationsdatenbank 116 ein Sender-Profil gespeichert, auf welches mit der Teilnehmerkennung des Teilnehmers I, das heißt dessen "Sender-ID" als Schlüssel zugegriffen werden kann. Das Sender-Profil des Teilnehmers I legt fest, dass ein von dem Teilnehmer I empfangenes elektronisches Dokument zu signieren ist und an einen in dem elektronischen Dokument angegebenen Empfänger weiterzuleiten ist. Ferner kann das Sender-Profil die Art der elektronischen Signierung angeben, nämlich ob ein Massensignaturverfahren angewendet werden soll oder ob die Signierung durch den Teilnehmer I selbst erfolgen soll. Für den Teilnehmer II ist ein Empfänger-Profil in der Konfigurationsdatenbank 116 gespeichert, auf das mit der Kennung des Teilnehmers II, das heißt mit dessen "Empfänger-ID" als Schlüssel zugegriffen werden kann. Das Empfängerprofil des Teilnehmers II legt das von dem Teilnehmer II geforderte Empfänger-Format und die Empfänger-Adresse des Teilnehmers II fest.

Die Kommunikation der Teilnehmer I, II, mit dem Computersystem 100 erfolgt mittels eines von der Kommunikationsschnittstelle zur Verfügung gestellten Datenprotokolls 102' und / oder über ein Web-Interface 102".

Eine von der Anwendung 120 des Computersystems 118 generierte Datei 122 beinhaltet ein elektronisches Dokument, wie zum Beispiel eine elektronische Rechnung. Wenn es sich bei der Anwendung 120 um ein SAP-System handelt, so wird die Datei 122 typischerweise im Format IDOC generiert. Die Kommunikationsschnittstelle 124 des Computersystems 118 ist daher so konfiguriert, dass die Versendung der Datei 122 an den dem IDOC-Format zugeordneten Port des Computersystems 100 erfolgt, das heißt an den TCP / IP-Port 144 mit der Portnummer B. Entsprechend verhält es sich für die Kommunikationsschnittstellen der weiteren Teilnehmer, die jeweils so konfiguriert sind, dass eine Versendung einer Datei an das Computersystem 100 an denjenigen Port des Computersystems 100 erfolgt, der dem jeweiligen Sender-Format zugeordnet ist.

Die Datei 122 wird also von dem TCP / IP-Port 144 des Computersystems 100 empfangen und an den Konverter 150 weitergeleitet, durch den eine Konvertierung des IDOC-Formats in XML erfolgt. Außerdem ist eine Authentifizierung des Teilnehmers I gegenüber dem Computersystem 100 erforderlich, welche durch die Authentifizierungskomponente 104 durchgeführt wird. Mit der Kennung des Teilnehmers I als Schlüssel wird auf dessen Sender-Profil in der Konfigurationsdatenbank 116 zugegriffen. Daraus ergibt sich, dass der Teilnehmer I eine elektronische Signierung der Datei 122 und deren Weiterleitung an einen in der Datei 122 identifizierten Teilnehmer wünscht. Daraufhin wird die Analyse-Komponente 114 gestartet, um eine Empfänger-Kennung aus der Datei 122 auszulesen, wie zum Beispiel die ILN des Teilnehmers, der die signierte Datei empfangen soll. Mit der so erhaltenen Empfänger-Kennung wird auf das Empfänger-Profil des Teilnehmers in der Konfigurationsdatenbank 116 zugegriffen, der die signierte Datei 122 erhalten soll. Dort ist das von dem Empfänger geforderte Empfänger-Format angegeben. Die XML konvertierte Datei 122 wird daraufhin von einem der Konverter 154, 156, 158, ... der Konvertergruppe 112" in das Empfänger-Format konvertiert. Verlangt der Empfänger - also zum Beispiel der Teilnehmer II - das Format EDIFACT, so wird die Konvertierung von dem Konverter 154 vorgenommen.

Die in das Empfänger-Format konvertierte Datei 122 wird sodann elektronisch signiert. Je nach der Festlegung in dem Sender-Profil des Teilnehmers I erfolgt dies durch das Computersystem 100 mittels der Signierungskomponente 106 in einem Massensignaturverfahren. Wenn der Teilnehmer I ein solches Massensignaturverfahren nicht in seinem Sender-Profil festgelegt hat, wird die in das Empfänger-Format konvertierte Datei 122 von dem Computersystem 100 über das Netzwerk 126 zurückgesendet. Der Teilnehmer I signiert dann mit seiner elektronischen Unterschrift, das heißt zum Beispiel mittels seiner Chipkarte 140 und seinem Signatur-Client 136, die in das Empfänger-Format konvertierte Datei 122. Diese wird dann von dem Teilnehmer I über das Netzwerk 126 wieder an das Computersystem 100 zurückübertragen, wobei in diesem Fall beim Empfang der signierten Datei 122 keine weitere Konvertierung erfolgt, da die Datei schon in dem Empfänger-Format vorliegt. Das Computersystem 100 leitet die signierte Datei 122 dann zum Beispiel über das Netzwerk 126 an das Computersystem 128 des Teilnehmers II weiter, und zwar mittels der in dem Empfänger-Profil angegebenen Empfänger-Adresse.

Die Teilnehmer I, II, ... können über das Web-Interface 102" auf deren Teilnehmerprofile, das heißt auf das Sender-Profil bzw. das Empfänger-Profil zugreifen, um dort Änderungen vorzunehmen.

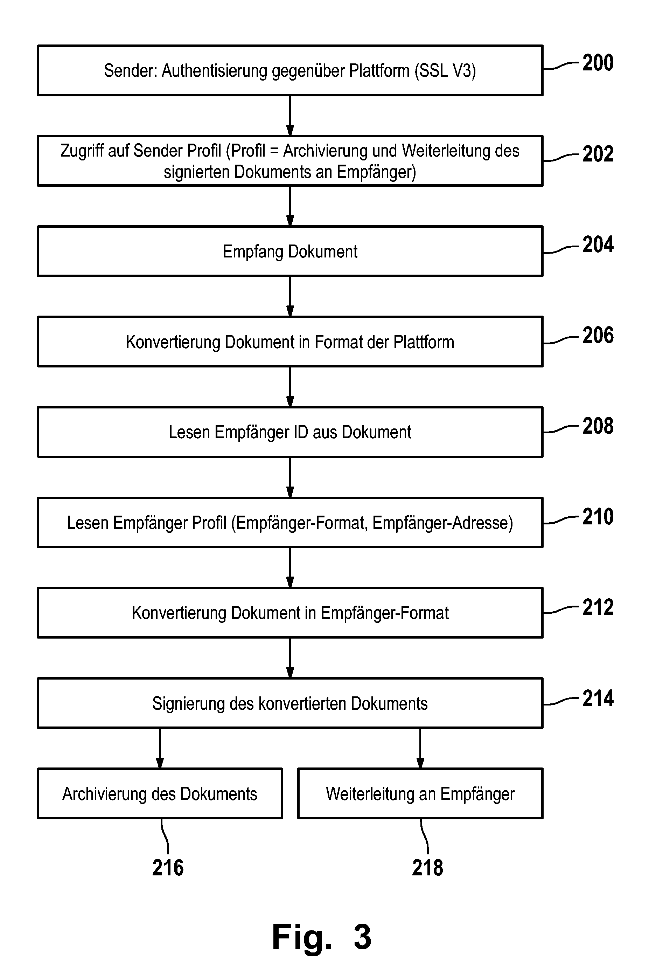

Die Figur 3 zeigt ein entsprechendes Flussdiagramm.

In dem Schritt 200 erfolgt eine Authentisierung eines der Teilnehmer, zum Beispiel des Teilnehmers I, der als Sender fungiert, gegenüber der von dem Computersystem 100 (vgl. Figuren 1 und 2) zur Verfügung gestellten Plattform. Vorzugsweise erfolgt die Authentisierung mit dem SSLV3Protokoll.

In dem Schritt 202 greift die Plattform auf das Sender-Profil des Teilnehmers I zu. Beispielsweise ist in dem Sender-Profil angegeben, dass ein von dem Computersystem 100 von diesem Teilnehmer empfangenes Dokument signiert an einen Empfänger weiterzuleiten und zu archivieren ist.

In dem Schritt 204 wird ein Dokument von dem Teilnehmer I empfangen. In dem Schritt 206 wird dieses in das Format der Plattform, d.h. dem Verarbeitungs-Format, konvertiert. In dem Schritt 208 wird aus dem in das Format der Plattform konvertierte Dokument eine Empfänger-Kennung "Empfänger-ID" gelesen. Mit der Empfänger-Kennung als Schlüssel wird in dem Schritt 210 auf das Empfänger-Profil zugegriffen, um das von dem Empfänger festgelegte Empfänger-Format und die Empfänger-Adresse zuzugreifen. Das Dokument wird dann in dem Schritt 212 in das Empfänger-Format konvertiert und in dem Schritt 214 erfolgt die elektronische Signierung des konvertierten Dokuments, entweder in einem Massensignaturverfahren durch die Plattform oder nach Rückübertragung des konvertierten Dokuments durch den Teilnehmer I selbst.

In dem Schritt 216 wird das Dokument für den Teilnehmer I archiviert. Dies kann in dem Sender-Format des Teilnehmers I, in dem Empfänger-Format des Teilnehmers II oder in dem XML-Format der Plattform erfolgen. Vorzugsweise erfolgt eine Archivierung in dem Format der Plattform.

In dem Schritt 218 wird das konvertierte und signierte Dokument an den Empfänger, das heißt zum Beispiel den Teilnehmer II, weitergeleitet.

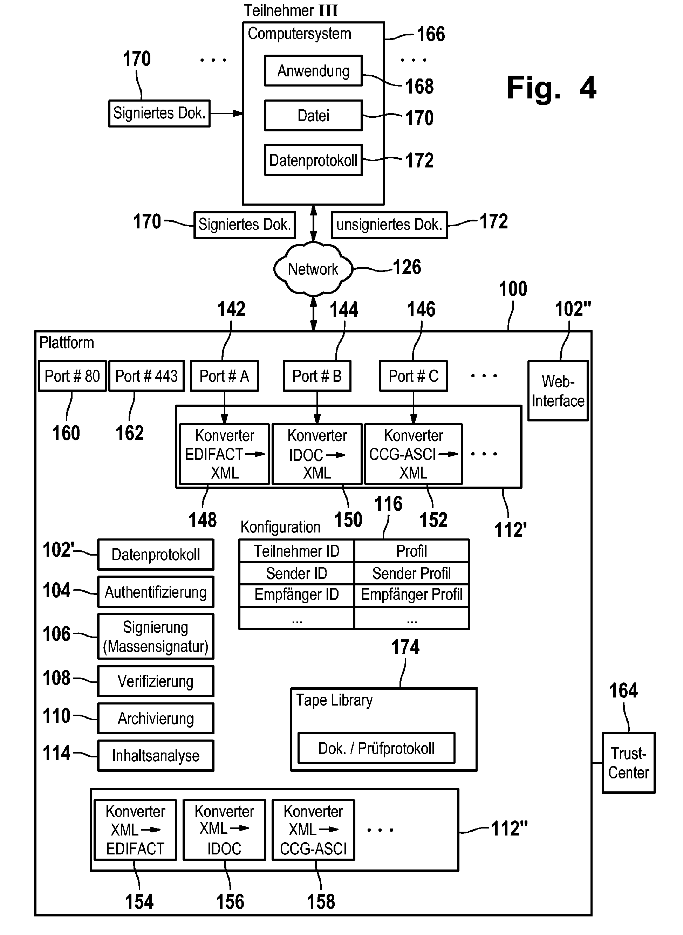

Die Figur 4 zeigt eine weitere Ausführungsform des Computersystems. Elemente der Figur 4, die Elementen der Figuren 1 und 2 entsprechen, sind mit denselben Bezugszeichen gekennzeichnet. Das Computersystem 100 in der Ausführungsform der Figur 4 hat neben den TCP / IP-Ports 142, 144, 146, ... , die jeweils einem bestimmten Sender-Format zugeordnet sind, die Standard-Ports 160 und 162 mit den Portnummern 80 bzw. 443 für die HTTP bzw. HTTPS Datenprotokolle.

Das Computersystem 100 ist mit einem sogenannten Trust-Center 164 verbunden oder beinhaltet ein solches. Bei dem Trust-Center 164 handelt es sich um eine Zertifizierungsstelle, beispielsweise nach dem Signaturgesetz der Bundesrepublik Deutschland. Mit Hilfe des Trust-Centers 164 kann überprüft werden, ob das mit einer elektronischen Signatur übertragene Zertifikat gültig ist oder nicht.

Die Figur 4 zeigt ein Computersystem 166 eines Teilnehmers III. Das Computersystem 166 hat ein Anwendungsprogramm 168 und eine Kommunikationsschnittstelle 172, die ein Datenprotokoll ausführen kann, wie zum Beispiel HTTP oder HTTPS. Durch das Computersystem 166 kann ein signiertes Dokument 170 empfangen werden, welches von der Anwendung 168 als Datei gespeichert wird.

Zur Überprüfung der elektronischen Signatur des signierten Dokuments 170 bedient sich der Teilnehmer III des Computersystems 100. Hierzu wird zwischen dem Computersystem 166 und dem Computersystem 100 über das Netzwerk 126 eine Verbindung aufgebaut, beispielsweise mittels HTTP oder HTTPS, das heißt mit dem Port 160 bzw. dem Port 162 des Computersystems 100. Hierüber wird der Teilnehmer III zunächst authentifiziert. Nach Identifizierung und Authentifizierung des Teilnehmers III wird auf dessen Teilnehmerprofil zugegriffen, und zwar mit seiner TeilnehmerKennung "Sender-ID" als Schlüssel, um auf sein "Sender-Profil" zuzugreifen. Das Teilnehmerprofil, das heißt das "Sender-Profil", das Teilnehmers III beinhaltet die Angabe, dass ein von dem Teilnehmer III empfangenes Dokument hinsichtlich seiner elektronischen Signatur zu überprüfen ist und das unsignierte Dokument wieder an den Teilnehmer III zurückzuleiten ist. Ferner beinhaltet das Sender-Profil die Angabe, dass das empfangene Dokument zusammen mit dem bei der Überprüfung der elektronischen Signatur generierten Prüfprotokoll zu archivieren ist.

Nachdem das Computersystem 100 das signierte Dokument 170 von dem Teilnehmer III empfangen hat, erfolgt eine Überprüfung der Echtheit und der Gültigkeit der elektronischen Signatur mit Hilfe der Verifizierungskomponente 108, die hierzu auch auf das Trust-Center 164 zugreift, um die Gültigkeit des zu der elektronischen Signatur gehörenden Zertifikats zu überprüfen. Hierbei wird ein Prüfprotokoll erstellt.

Das unsignierte Dokument 172 wird von dem Computersystem 100 an den Teilnehmer III, das heißt dessen Computersystem 166, zurückgesendet. Ferner werden das signierte Dokument 170 und / oder das unsignierte Dokument 172 zusammen mit dem bei der Verifizierung generierten Prüfprotokoll durch die Archivierungskomponente 110 archiviert. Beispielsweise wird hierzu eine sogenannte Tape Library 174 des Computersystems 100 verwendet oder ein anderes, für die Archivierung geeignetes Speichermedium.

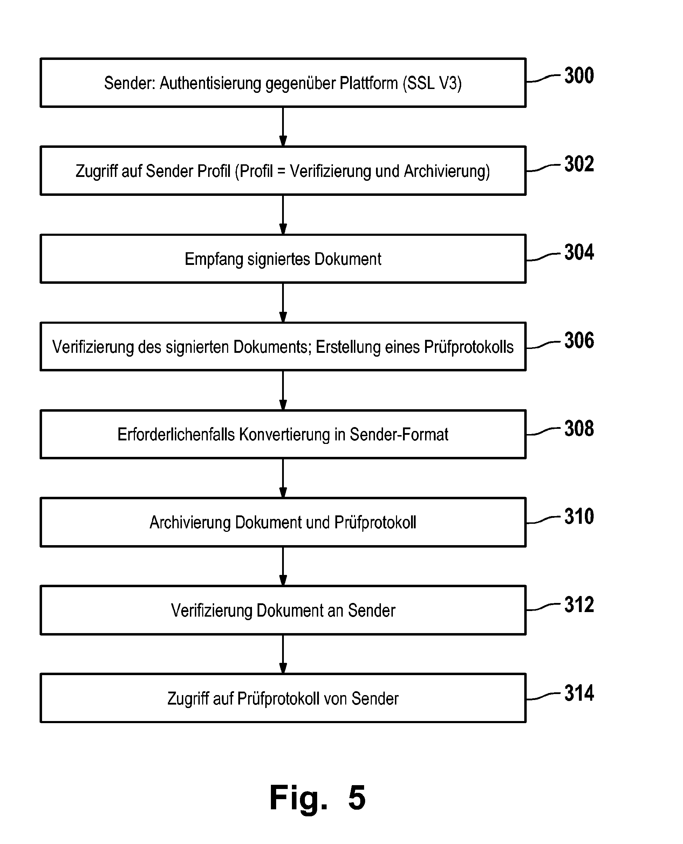

Die Figur 5 zeigt ein entsprechendes Flussdiagramm.

In dem Schritt 300 folgt die Authentisierung des Teilnehmers III, das heißt des Senders des signierten Dokuments, gegenüber der Plattform. Die Plattform greift dann in dem Schritt 302 auf das Sender-Profil des Teilnehmers III zu, welches die Verifizierung und Archivierung der von dem Teilnehmer III empfangenen Daten festlegt. In dem Schritt 304 wird ein signiertes Dokument von dem Teilnehmer III von der Plattform empfangen. In dem Schritt 306 erfolgt eine Verifikation der elektronischen Signatur des Dokuments und die Erstellung eines entsprechenden Prüfprotokolls. Wenn dies in dem Sender-Profil angegeben ist, kann nach der Überprüfung einer Konvertierung in ein von dem Teilnehmer III gewünschtes Format erfolgen.

Hierzu kann einer der Konverter der Konvertergruppe 112" (vgl. Figur 4) eingesetzt werden, um ein in das gewünschte Format konvertiertes unsigniertes Dokument 172 (vgl. ebenfalls Figur 4) zu erzeugen. In dem Schritt 310 wird das Dokument und sein dazugehöriges Prüfprotokoll archiviert und das verifizierte und unsignierte Dokument in dem Schritt 312 erforderlichenfalls nach Konvertierung an den Teilnehmer III übertragen. In dem Schritt 314 kann der Teilnehmer III zum Beispiel über das Web-Interface der Plattform auf das archivierte Prüfprotokoll zugreifen. Ein solcher Zugriff auf das Prüfprotokoll kann auch durch andere hierzu autorisierte Teilnehmer erfolgen.

### Bezugszeichenliste

- 100: Computersystem
- 102: Kommunikationsschnittstelle
- 102': Datenprotokoll
- 102": Web-Interface
- 104: Authentifizierungskomponente
- 106: Signierungskomponente
- 108: Verifizierungskomponente
- 110: Archivierungskomponente
- 112: Konvertierungskomponente
- 112': Konvertergruppe
- 112": Konvertergruppe
- 114: Analyse-Komponente
- 116: Konfigurationsdatenbank
- 118: Computersystem
- 120: Anwendungsprogramm
- 122: Datei
- 124: Kommunikationsschnittstelle
- 126: Netzwerk
- 128: Computersystem
- 130: Anwendungsprogramm
- 132: Datei
- 134: Kommunikationsschnittstelle
- 136: Signatur-Client
- 138: Chipkartenlesegerät
- 140: Chipkarte
- 142: TCP / IP-Port
- 144: TCP / IP-Port
- 146: TCP / IP-Port
- 148: Konverter
- 150: Konverter
- 152: Konverter
- 154: Konverter
- 156: Konverter
- 158: Konverter
- 160: Standardport
- 162: Standardport
- 164: Trust-Center
- 166: Computersystem
- 168: Anwendungsprogramm
- 170: signiertes Dokument
- 172: unsigniertes Dokument
- 174: Tape Library

## Patentansprüche

1. Computersystem mit
- Mitteln (102; 102' , 102") zur Herstellung von Kommunikationsverbindungen mit mehreren Teilnehmern,
- Mitteln (106) zur Signierung von Daten, die von einem der Teilnehmer empfangen worden sind,
- Mitteln (108) zur Verifizierung einer elektronischen Signatur von Daten, die von einem der Teilnehmer empfangen worden sind,
- Mitteln (110) zur Archivierung von Daten, die von einem der Teilnehmer empfangen worden sind,
- Mitteln (116) zur Speicherung von Teilnehmerprofilen, wobei durch ein Teilnehmerprofil festgelegt ist, ob von dem betreffenden Teilnehmer empfangene Daten zu signieren, zu verifizieren und / oder zu archivieren sind.

2. Computersystem nach Anspruch 1, mit Mitteln (112; 112', 112") zur Konvertierung der Daten von einem Sender-Format eines ersten der Teilnehmer in ein Format des Computersystems und zur Konvertierung der Daten von dem Format des Computersystems in ein Empfänger-Format eines zweiten der Teilnehmer.

3. Computersystem nach Anspruch 1 oder 2, mit Mitteln (104) zur Authentifizierung der Teilnehmer.

4. Computersystem nach Anspruch 3, wobei die Mittel zur Authentifizierung zur Durchführung eines kryptographischen Protokolls ausgebildet sind.

5. Computersystem nach einem der vorhergehenden Ansprüche, wobei die Mittel zur Herstellung von Kommunikationsverbindungen zur Durchführung eines Datenprotokolls ausgebildet sind.

6. Computersystem nach einem der vorhergehenden Ansprüche, wobei die Mittel zur Herstellung von Kommunikationsverbindungen zum Empfang von Daten (122) von einem ersten der Teilnehmer und zur Weiterleitung der signierten Daten an einen zweiten der Teilnehmer ausgebildet sind, wobei die Daten eine Kennung zur Identifizierung des zweiten der Teilnehmer beinhalten, und wobei das Teilnehmerprofil des zweiten der Teilnehmer so ausgebildet ist, dass hierauf mit Hilfe der Kennung zugegriffen werden kann.

7. Computersystem nach Anspruch 6, wobei das Teilnehmerprofil des ersten der Teilnehmer festlegt, dass die von dem ersten der Teilnehmer empfangenen Daten zu signieren sind, und das Teilnehmerprofil des zweiten der Teilnehmer das Empfänger-Format des zweiten der Teilnehmer und eine Empfänger-Adresse des zweiten der Teilnehmer festlegt.

8. Computersystem nach einem der vorhergehenden Ansprüche, wobei die Mittel zur Herstellung von Kommunikationsverbindungen zum Empfang von signierten Daten (170) von einem ersten der Teilnehmer ausgebildet sind, und wobei das Teilnehmerprofil des ersten der Teilnehmer festlegt, dass eine Verifizierung der Signatur der signierten Daten und eine Archivierung der Daten zu erfolgen hat, wobei die Mittel zur Verifizierung zur Generierung eines Prüfprotokolls ausgebildet sind, wobei das Prüfprotokoll zusammen mit den Daten archiviert wird.

9. Computersystem nach Anspruch 8, wobei die Mittel zur Herstellung von Kommunikationsverbindungen so ausgebildet ist, dass ein hierzu autorisierter Teilnehmer auf das Prüfprotokoll zugreifen kann.

10. Computersystem nach Anspruch 9, mit einem Web-Interface (102") zum Zugriff auf das Prüfprotokoll.

11. Computersystem nach einem der vorhergehenden Ansprüche, wobei die Mittel zur Herstellung von Kommunikationsverbindungen mehrere Ports (142, 144,m 146,...) aufweisen, wobei jedem Port ein Sender-Format zugeordnet ist.

12. Computersystem nach Anspruch 11, wobei jedem Port ein Konverter (148, 150, 152,...) zur Konvertierung aus dem betreffenden Sender-Format in ein Format des Computersystems zugeordnet ist.

13. Computersystem nach einem der vorhergehenden Ansprüche, wobei die Mittel zur Herstellung von Kommunikationsverbindungen so ausgebildet sind, dass die Teilnehmer auf deren Teilnehmerprofile lesend und / oder schreibend zugreifen können.

14. Computersystem nach Anspruch 13, wobei der Zugriff über ein Web-Interface (102") zur Verfügung gestellt wird.

15. Computersystem nach einem der vorhergehenden Ansprüche, mit Mitteln zum Ausdruck der Daten und einer durch ein Teilnehmerprofil festgelegten Empfänger-Adresse.

16. Computersystem nach einem der vorhergehenden Ansprüche 1 bis 15, wobei die Mittel zur Signierung zur Durchführung eines Massensignaturverfahrens ausgebildet sind, und durch ein Teilnehmerprofil festlegbar ist, ob von dem betreffenden Teilnehmer empfangene Daten durch das Massensignaturverfahren zu signieren sind.

17. Computersystem nach einem der vorhergehenden Ansprüche, wobei die Mittel zur Herstellung von Kommunikationsverbindungen eine Web-Plattform bilden.

18. Computersystem nach einem der vorhergehenden Ansprüche, mit Mitteln zur Konvertierung der von einem Teilnehmer empfangenen Daten in eine Auszeichnungssprache und zur Konvertierung der Daten von dem Format der Auszeichnungssprache in ein Empfänger-Format.

19. Verfahren zur Signierung, Signaturverifizierung und / oder Archivierung von Daten mittels eines Computersystems, wobei das Computersystem Mittel (116) zum Speichern von Teilnehmerprofilen aufweist, wobei durch ein Teilnehmerprofil festgelegt ist, ob von dem betreffenden Teilnehmer empfangene Daten zu signieren, zu verifizieren und / oder zu archivieren sind, mit folgenden Schritten:
- Aufbau einer Kommunikationsverbindung eines der Teilnehmer mit dem Computersystem zum Empfangen von Daten des Teilnehmers,
- Zugriff auf das Teilnehmerprofil des einen der Teilnehmer,
- Signierung, Signaturverifizierung und / oder Archivierung der Daten in Abhängigkeit von dem Teilnehmerprofil des einen der Teilnehmer.

20. Verfahren nach Anspruch 19, wobei die von dem einen der Teilnehmer empfangenen Daten in das Format einer Auszeichnungssprache konvertiert werden.

21. Verfahren nach Anspruch 19 oder 20, wobei die Daten an einem Port des Computersystems empfangen werden, der dem Format der Daten zugeordnet ist.

22. Verfahren nach Anspruch 19, 20 oder 21, wobei die Daten eine Kennung beinhalten und mit Hilfe der Kennung auf ein weiteres Teilnehmerprofil zugegriffen wird, um ein Empfänger-Format und eine Empfänger-Adresse eines weiteren Teilnehmers zu ermitteln, an den die Daten weitergeleitet werden sollen.

23. Verfahren nach einem der vorhergehenden Ansprüche 19 bis 22, wobei aufgrund des Teilnehmerprofils eine Signaturverifizierung einer Signatur der Daten erfolgt und ein Prüfprotokoll generiert wird, welches zusammen mit den Daten archiviert wird, und welches von einem hierzu autorisierten Teilnehmer über eine Kommunikationsschnittstelle abrufbar ist.

24. Verfahren nach Anspruch 23, wobei es sich bei der Kommunikationsschnittstelle um ein Web-Interface handelt.

25. Computerprogrammprodukt, insbesondere digitales Speichermedium, mit Computer ausführbaren Instruktionen zur Durchführung eines Verfahrens nach einem der Patentansprüche 19 bis 24.
